# EUROPÄISCHE PATENTSCHRIFT

(11) **EP 2 160 283 B1**
(45) Veröffentlichungstag und Bekanntmachung des Hinweises auf die Patenterteilung: **19.08.2020**
(21) Anmeldenummer: 08757964.5
(22) Anmeldetag: 10.04.2008
(51) Int. Cl.: B29C 49/42, F16F 7/10, F16F 15/02, F16F 15/12, B29C 49/06, B29C 49/64, B29K 67/00, B29C 49/36, B29L 31/00

(54) **PRODUKTIONSMASCHINE SOWIE VERFAHREN ZUM BETRIEB EINER PRODUKTIONSMASCHINE**
PRODUCTION MACHINE AND PROCESS FOR OPERATING A PRODUCTION MACHINE
MACHINE DE PRODUCTION ET PROCÉDÉ POUR LE FONCTIONNEMENT D'UNE MACHINE DE PRODUCTION

(30) Priorität: 29.06.2007 DE 102007030447
(43) Veröffentlichungstag der Anmeldung: 10.03.2010
(73) Patentinhaber: KHS Corpoplast GmbH, 22145 Hamburg (DE)
(72) Erfinder: BERGER, Frank, 22885 Barsbüttel (DE); LITZENBERG, Michael, 21502 Geesthacht (DE); LEWIN, Frank, 22889 Tangstedt (DE); BAUMGARTE, Rolf, 22926 Ahrensburg (DE); LINKE, Michael, 22047 Hamburg (DE)
(74) Vertreter: Hausfeld, Norbert
(86) Internationale Anmeldenummer: PCT/DE2008/000667
(87) Internationale Veröffentlichungsnummer: WO 2009/003433

(56) Entgegenhaltungen:
- EP-A- 1 293 329
- EP-A- 1 369 745
- EP-A- 1 752 683
- WO-A-03/022516
- GB-A- 925 325
- US-A- 5 528 348
- US-A- 5 700 116
- US-A1- 2003 132 076
- US-A1- 2004 099 087

## Beschreibung

Die Erfindung betrifft ein Verfahren zum Betrieb einer Produktionsmaschine, die mit einem rotierenden Arbeitsrad sowie einer Mehrzahl auf dem Arbeitsrad positionierter Bearbeitungsstationen versehen ist.

Die Erfindung betrifft darüber hinaus eine Produktionsmaschine mit einem rotierendem Arbeitsrad und einer Mehrzahl auf dem Arbeitsrad angeordneter Bearbeitungsstationen.

Die Erfindung betrifft insbesondere auch ein Verfahren zur Blasformung von Behältern unter Verwendung einer Produktionsmaschine mit einem rotierenden Blasrad, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird. Eine solche Produktionsmaschine mit einem rotierenden Blasrad ist zum Beispiel aus der EP 1 293 329 A1 bekannt.

Die Erfindung betrifft darüber hinaus insbesondere auch eine Produktionsmaschine zur Blasformung von Behältern aus einem thermoplastischen Material, die mindestens eine entlang eines Transportweges eines Vorformlings angeordnete Heizstrecke und eine mit einer Blasform versehene und auf einem Blasrad angeordnete Blasstation aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Generell tritt bei einem Betrieb von Produktionsmaschinen mit rotierenden Arbeitsrädern und insbesondere auch bei einem Betrieb von Blasmaschinen mit einem rotierenden Blasrad das Problem auf, daß das Arbeitsrad einschließlich der auf ihm angeordneten Bauelemente und der verwendeten Rotationslagerung mindestens eine konstruktiv bedingte Eigenfrequenz aufweist. Bei einem Betrieb der Produktionsmaschine treten unter Berücksichtigung der Anzahl der verwendeten Bearbeitungsstationen, der von den Bearbeitungsstationen durchgeführten Bewegungen sowie der Einwirkung externer oder auf dem Arbeitsrad angeordneter Betätigungs- oder Positionierelemente hervorgerufene Anregungsschwingungen auf. Bei einer Identität oder einer zumindest weitgehenden Übereinstimmung der Eigenfrequenz und der Anregungsfrequenz treten Schwingungen des Gesamtsystems mit großen Schwingungsamplituden auf.

Eine zusätzliche Führung des Arbeitsrades zur Begrenzung der Schwingungsamplituden erweist sich in der Regel nicht als zweckmäßig, da derartige Schwingungen im Bereich der Eigenfrequenz der Bauelemente zu hohen Krafteinwirkungen führen. Üblich ist deshalb die Verwendung von Dämpfungselementen, die zum einen jedoch auch starken mechanischen Belastungen unterliegen und darüber hinaus häufig nicht zu einer ausreichend starken Beruhigung des Gesamtsystems führen.

Ebenfalls sind bereits sogenannte Schwingungstilger bekannt, die aus gedämpften Feder-Masse-Systemen bestehen und im Bereich des zu beruhigenden Bauelementes angeordnet werden. Derartige Schwingungstilger führen in der Praxis zu einer Dämpfung der Eigenschwingungen, ohne diese jedoch verhindern zu können. Eine Anwendung für Produktionsmaschinen konnte bislang nicht realisiert werden.

Aus der US 5,700,116 ist ein einstellbares Dämpfungselement zur Reduzierung von Schwingungen bei einem rotierenden metallbearbeiteten Werkzeug bekannt. Die US 2004/0099087 A1 betrifft ein Schwingungsdämpfungselement mit veränderlicher Gewichtsverteilung, wobei dieses Dämpfungselement zur Verwendung mit drehenden Elementen wie zum Beispiel dem Antriebsstrang eines Kraftfahrzeuges gedacht ist. Die US 5,528,348 betrifft die Fotorezeptortrommel eines Druckers und die Vermeidung von für das Druckbild störenden Schwingungen bei einer solchen Fotorezeptortrommel. Die GB 925,325 betrifft die Vermeidung von Schwingungen bei einem Drehantrieb mit einer Kupplung, wobei es insbesondere um Verbrennungsmotoren für den Antrieb eines Flugzeugpropellers geht. Schließlich betrifft die US 2003/0132076 A1 eine Druckmaschine mit rotierenden Elementen. Zur Vermeidung von Druckfehlern sind Schwingungsabsorber vorgesehen.

Aufgabe der vorliegenden Erfindung ist es, ein Verfahren der einleitend genannten Art derart zu verbessern, daß ein Auftreten von Eigenschwingungen mit großer Schwingungsamplitude vermieden wird.

Diese Aufgabe wird erfindungsgemäß dadurch gelöst, daß eine Eigenschwingungscharakteristik des mit den Bearbeitungsstationen versehenen Arbeitsrades derart modifiziert wird, daß die modifizierte Eigenschwingungscharakterisitik unterschiedlich zu einer Resonanzschwingungscharakteristik bei einer auf das Arbeitsrad einwirkenden Anregungsfrequenz vorgegeben wird. Zur Anpassung an unterschiedliche Betriebsparameter erweist es sich erfindungsgemäß als vorteilhaft, daß im Bereich des Arbeitsrades ein Modifizierer mit vorgebbaren variablen dynamischen Eigenschaften zur Modifizierung der Eigenfrequenz positioniert wird.

Weitere Aufgabe der vorliegenden Erfindung ist es, eine Produktionsmaschine der einleitend genannten Art derart zu konstruieren, daß ein Auftreten von Eigenschwingungen mit großen Amplituden vermieden wird.

Diese Aufgabe wird erfindungsgemäß dadurch gelöst, daß im Bereich des Arbeitsrades mindestens ein Modifizierer zur Veränderung einer Eigenschwingungscharakteristik des mit den Bearbeitungsstationen versehenen Arbeitsrades angeordnet ist und daß der Modifizierer eine Schwingungsdynamik derart aufweist, daß die modifizierte Eigenschwinungscharakteristik unterschiedlich zu einer Resonanzcharakterisitik bei einer vorgegebenen Anregungsfrequenz ist. Zur Anpassung an unterschiedliche Betriebsparameter erweist es sich erfindungsgemäß als vorteilhaft, daß im Bereich des Arbeitsrades ein Modifizierer mit vorgebbaren variablen dynamischen Eigenschaften zur Modifizierung der Eigenfrequenz positioniert wird.

Eine Kompensationsvariante besteht darin, daß die dynamischen Eigenschaften des Modifizierers in Abhängigkeit von einer auf das Arbeitsrad einwirkenden Anregungsfrequenz verändert werden.

Darüber hinaus ist daran gedacht, daß die dynamischen Eigenschaften des Modifizierers in Abhängigkeit von einer Drehzahl des Arbeitsrades verändert werden.

Erfindungsgemaß wurde erkannt, daß Produktionsmaschinen mit rotierenden Arbeitsrädern in Abhängigkeit von der Drehzahl des Arbeitsrades und in Abhängigkeit von den konkreten Produktionsabläufen variierenden Anregungsfrequenzen ausgesetzt sind. Bei einer unveränderten Eigenfrequenz des Gesamtsystems, die innerhalb des möglichen Anregungsspektrums liegt, können deshalb die aus dem Stand der Technik bekannten Maßnahmen nur zu einer Begrenzung der negativen Auswirkungen, nicht jedoch zu einer Vermeidung der Ursache beitragen.

Nur eine Verschiebung der Eigenfrequenz in einen Bereich, der außerhalb des vorgesehenen Arbeitsbereiches liegt, oder die Generierung von Überlagerungsschwingungen, die gleichfrequent zu den Eigenschwingungen, jedoch um 180° phasenverschoben sind, gewährleistet eine Vermeidung des Auftretens von eigenfrequenten Schwingungen mit hohen Amplituden, die ansonsten häufig selbst bei bedämpften Systemen Amplitudenwerte erreichen, die um den Faktor 100 größer als die Amplitude der Anregungsschwingung sind. Insbesondere bei einem Betrieb von als Blasmaschinen ausgebildeten Produktionsmaschinen handelt es sich bei der Veränderung der Eigenschwingungscharakteristik um ein völlig neuartiges Konzept, das zu einem überraschend ruhigen Maschinenbetrieb führt.

Generell wird unter einer Veränderung der Eigenschwingungscharakteristik verstanden, daß entweder die Frequenz von möglichen Eigenschwingungen durch den Modifizierer derart verschoben wird, daß diese außerhalb des Anregungsspektrums liegt, darüber hinaus ist alternativ oder ergänzend aber auch daran gedacht, durch den Modifizierer Kompensationsschwingungen zu generieren, die bei einer Überlagerung mit den eigenfrequenten Schwingungen des Systems zu Summenschwingungen mit nur geringer Amplitude führen. Dies kann insbesondere durch einen Phasenversatz um 180° bei gleicher Frequenz der zu überlagernden Schwingungen erreicht werden.

Eine gute Zugänglichkeit sowie eine einfache Zuführung von Versorgungsmedien wird dadurch unterstützt, daß das Arbeitsrad im Bereich seiner in lotrechter Richtung unteren Ausdehnung rotationsfähig gelagert wird.

Eine präzise Lagerung wird dadurch unterstützt, daß das Arbeitsrad von einem Kugel-Dreh-Verbinder rotationsfähig gelagert wird.

Eine Variante zur Veränderung der Eigenfrequenz besteht darin, daß eine Eigenfrequenz des Arbeitsrades durch die Positionierung einer Schwingungsmasse auf dem Arbeitsrad verändert wird.

Insbesondere ist daran gedacht, daß die Schwingungsmasse relativ zum Arbeitsrad elastisch gelagert wird.

Eine Anpassung an unterschiedliche Betriebsparameter wird dadurch unterstützt, daß die Schwingungsmasse relativ zum Arbeitsrad positionierbar gelagert wird.

Eine einfache Einstellvariante besteht darin, daß die Schwingungsmasse in einer radialen Richtung des Arbeitsrades positionierbar gelagert wird.

Bei einem konstanten Einleitungsort der Anregung erweist es sich als vorteilhaft, daß die Schwingungsmasse in einer Umfangsrichtung des Arbeitsrades positionierbar gelagert wird.

Zur Minimierung einer resultierenden wirksamen Anregung wird vorgeschlagen, daß eine auf das Arbeitsrad einwirkende Anregung mindestens teilweise kompensiert wird.

Eine einfach steuerbare Verlagerung einer Schwingungsmasse kann dadurch bereitgestellt werden, daß die dynamischen Eigenschaften des Modifizierers durch eine variable oder positionierbare Masse verändert werden.

Eine bevorzugte Anwendung besteht darin, daß die Eigenfrequenz eines mit Blasstationen versehenen Blasrades verändert wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität ,
- Fig. 5: eine schematische Darstellung eines Arbeitsrades mit Trägern für die Bearbeitungsstation, wobei in einem dem Arbeitsrad abgewandten Bereich der Träger ein Modifizierer zur Veränderung der Eigenschwingungscharakteristik angeordnet ist und
- Fig. 6: eine teilweise Darstellung eines vergrößerten Querschnittes gemäß Schnittlinie VI-VI in Fig. 5.

Der grundsätzliche Aufbau einer Produktionsmaschine mit einem Arbeitsrad und hierauf angeordneter Bearbeitungsstationen wird nachfolgend am Beispiel einer Blasmaschine beschrieben, die bei der Durchführung eines Verfahrens zur zweistufigen Blasformung eingesetzt wird. Ein Verfahrensprodukt bei der Anwendung des erfindungs-gemäßen Verfahrens stellen die hierbei geblasenen Behälter (2) dar.

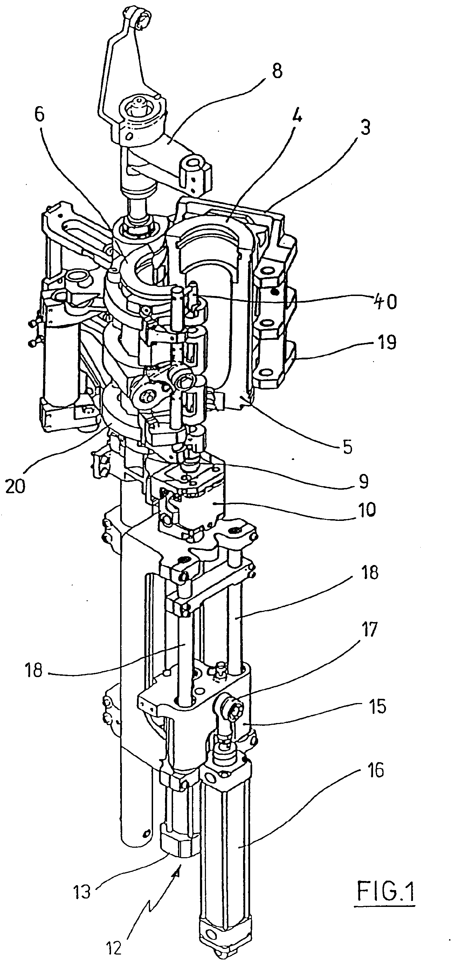

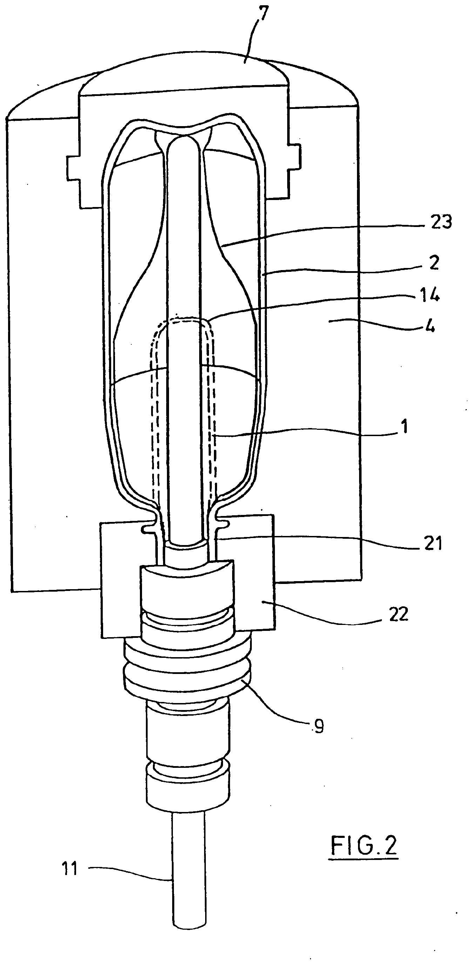

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

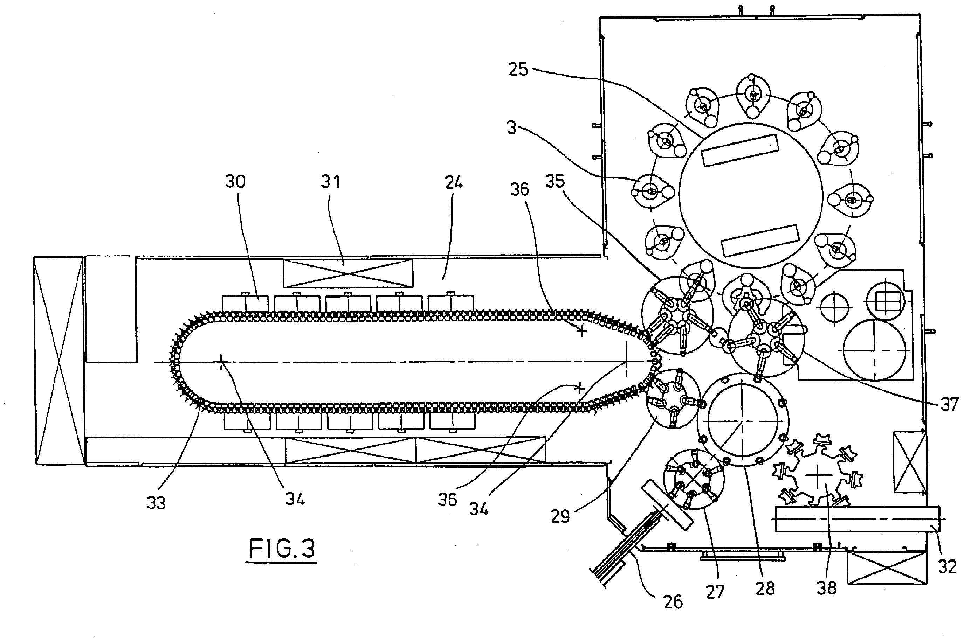

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch 'die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

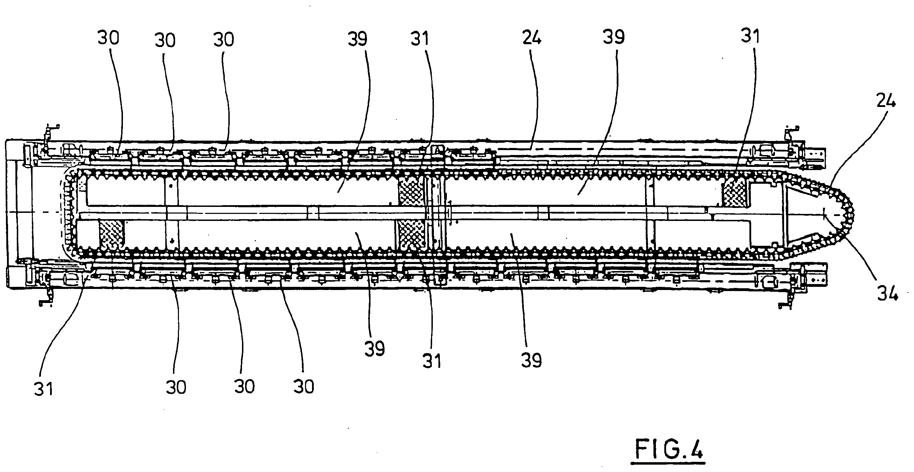

In der in Fig. 4 dargestellten modifizierten Heizstrecke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

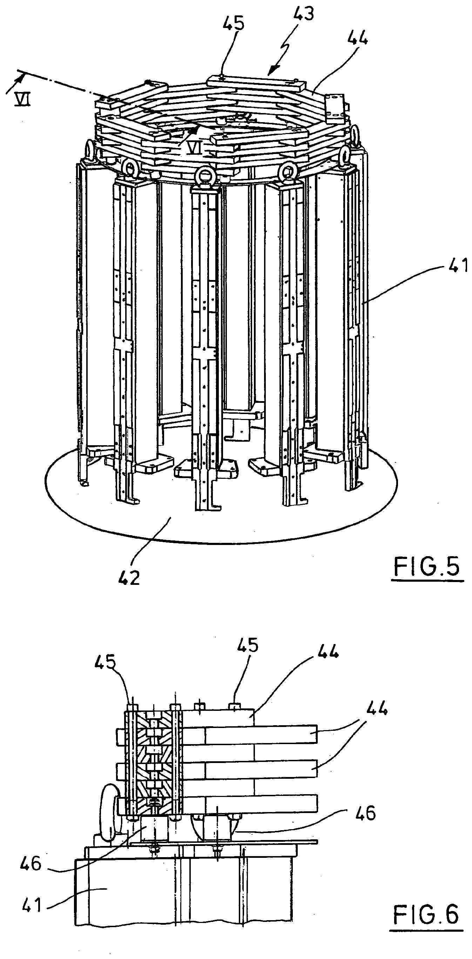

Fig. 5 zeigt am Beispiel des Blasrades (25) einer Blasmaschine das Arbeitsrad einer Produktionsmaschine mit darauf angeordneten Trägern (41) für zeichnerisch nicht dargestellte Bearbeitungsstationen, beispielsweise Blasstationen (3). Die Träger (41) sind im Bereich ihrer in lotrechter Richtung unteren Ausdehnung mit dem Arbeitsrad (42) verbunden. Zusätzlich ist auf dem Arbeitsrad (42) ein Modifizierer (43) zur Veränderung der Eigenschwingungscharakteristik der aus dem Arbeitsrad (42) und den Bearbeitungsstationen mit Trägern (41) zusammengesetzten Baugruppe angeordnet. Beim dargestellten Ausführungsbeispiel ist der Modifizierer (43) im Bereich der dem Arbeitsrad (42) abgewandten Ausdehnung der Träger (41) mit den Trägern (41) verbunden.

Der Modifizierer (43) besteht beim dargestellten Ausführungsbeispiel aus einer Vielzahl von Elementen (44), die vorzugsweise eine plattenartige Ausbildung aufweisen und aus Metall, beispielsweise aus Eisen oder Stahl, gefertigt sein können. Die Elemente (44) sind wenigstens teilweise über Kopplungselemente (45) miteinander verbunden. Insbesondere ist auch daran gedacht, die Elemente (44) über elastische Kopplungselemente (46) mit dem Arbeitsrad (42) bzw. den Trägern (41) zu verbinden.

Gemäß dem in der Zeichnung veranschaulichten Ausführungsbeispiel bestehen die Kopplungselemente (45) aus Bolzen. Die Bolzen erstrecken sich durch zugeordnete Ausnehmungen, beispielsweise Bohrungen, durch die Elemente (44) hindurch.

Die modulare Ausbildung des Modifizierers (43) aus den Elementen (44) ermöglicht es, die Anzahl der verwendeten Elemente (44) und somit die Masse des Modifizierers (43) an die Eigenschwingungscharakteristik des Arbeitsrades anzupassen. Es kann insbesondere eine Anordnung einer geeigneten Anzahl von Elementen (44) derart erfolgen, daß eine optimale Dimensionierung des bereitgestellten Feder-Masse-Systems realisiert ist.

Bei einer Berücksichtigung einer Umgebung der Produktionsmaschine ist es insbesondere bei Produktionsmaschinen, die in Gebäuden auf Hallendecken betrieben werden möglich, die Schwingungscharakteristik mindestens der tragenden Hallendecke, beispielsweise auch aber die Schwingungscharakteristik des gesamten Gebäudes mit in die Dimensionierung des Modifizierers (41) einzubeziehen, um Gebäudeschwingungen oder die Generierung von Körperschall zu vermindern.

Aus der vergrößerten Querschnittdarstellung in Fig. 6 ist zu erkennen, daß die Elemente (44) über als Lager (46) ausgebildete elastische Kopplungselemente mit den Trägern (41) verbunden sind. Die Lager (46) können als sogenannte Ultra-Buchsen ausgeführt sein, bei denen ein zentraler mechanischer Haltebolzen in ein elastomeres Material eingebettet ist und wobei dieses elastomere Material die Elemente (44) trägt. Die Lager (46) stellen somit die elastische Kopplung der Elemente (44) mit den Trägern (41) bereit.

Die vorstehend erläuterte Konstruktion zur Vermeidung von Eigenschwingungen des Arbeitsrades ist auch dafür geeignet, eine Schwingungsminimierung hinsichtlich der Gesamtmaschine zu erreichen. Beispielsweise kann ein Ziel darin bestehen, die Einleitung von Schwingungen oder Vibrationen in Hallenböden oder Geschoßdecken zu verringern. Die Abstimmung des Modifizierers (43) erfolgt hierbei dann unter Berücksichtigung der Schwingungseigenschaften des Gesamtsystems, beispielsweise der Eigenschaften einer Blasmaschine unter Berücksichtigung des Hallenbodens bzw. der Geschoßdecke.

Ein adaptiver Modifizerer (43) kann beispielsweise eine einstellbare Eigenfrequenz besitzen. Die Einstellbarkeit kann beispielsweise durch eine federnd gelagerte Masse realisiert werden. Bei einer Verwendung von pneumatischen Federn als Lagerelemente wird über den Druck in den pneumatischen Federn die Steifigkeit und damit die Eigenfrequenz des Modifizierers (43) festgelegt. Mit zunehmender Steifigkeit erhöht sich auch die Eigenfrequenz. Ebenfalls ist es möglich, die Dämpfung zu verändern.

Gedacht ist auch an die Verwendung von selbst einstellenden Modifizierern (43). Beispielsweise kann eine Masse des Modifizierers (43) in einer radialen Richtung des Arbeitsrades verschieblich gelagert sein und eine jeweilige Positionierung der Masse erfolgt unter Berücksichtigung der Fliehkraft. Ebenfalls kann eine aktive gesteuerte oder geregelte Veränderung von Eigenschaften des Modifizierers (43), beispielsweise der Masse, der Positionierung der Masse, der Federsteifigkeit und/oder der Dämpfung in Abhängigkeit von Daten aus der Maschinensteuerung erfolgen. Eine weitere Variante besteht darin, über eine Fliehkrafteinwirkung auf eine Masse einen Druck in einer pneumatischen Feder zu erhöhen und hierdurch mit steigender Drehzahl des Arbeitsrades auch die Eigenfrequenz des Modifizierers (43) zu verändern.

Alternativ zur Verwendung eines einzelnen Modifizierers (43) können auch mehrere Modifizierer (43) zum Einsatz kommen. Insbesondere ist es hierdurch möglich, bei einem Auftreten mehrerer unterschiedlicher Eigenfrequenzen eine Veränderung der jeweiligen Eigenfrequenz durch einen zugeordneten Modifizierer (43) vorzunehmen. Ebenfalls ist daran gedacht, eine Mehrzahl von Modifizierern (43) zu verwenden, die jeweils einer bestimmten Baugruppe zugeordnet sind und hierdurch örtlich verteilt die Modifizierungen der Eigenfrequenzen durchführen, bzw. mehrere unterschiedliche Kompensationsschwingungen erzeugen.

## Patentansprüche

1. Verfahren zum Betrieb einer Produktionsmaschine, die mit einem rotierenden Arbeitsrad und einer Mehrzahl auf dem Arbeitsrad positionierter Bearbeitungsstationen versehen ist, **dadurch gekennzeichnet, daß** eine Eigenschwingungscharakteristik des mit den Bearbeitungsstationen versehenen Arbeitsrades derart modifiziert wird, daß die modifizierte Eigenschwingungscharakteristik unterschiedlich zu einer Resonanzschwingungscharakteristik bei einer auf das Arbeitsrad einwirkenden Anregungsfrequenz vorgegeben wird, wobei dazu im Bereich des Arbeitsrades ein Modifizierer (43) mit vorgebbaren variablen dynamischen Eigenschaften zur Modifizierung der Eigenschwingungscharakteristik positioniert wird.

2. Verfahren nach Anspruch 1, **dadurch gekennzeichnet, daß** die dynamischen Eigenschaften des Modifizierers (43) in Abhängigkeit von einer auf das Arbeitsrad einwirkenden Anregungsfrequenz verändert werden.

3. Verfahren nach Anspruch 1, **dadurch gekennzeichnet, daß** die dynamischen Eigenschaften des Modifizierers (43) in Abhängigkeit von einer Drehzahl des Arbeitsrades verändert werden.

4. Verfahren nach einem der Ansprüche 1-3, **dadurch gekennzeichnet, daß** das Arbeitsrad im Bereich seiner in lotrechter Richtung unteren Ausdehnung rotationsfähig gelagert wird.

5. Verfahren nach einem der Ansprüche 1 bis 4, **dadurch gekennzeichnet, daß** das Arbeitsrad von einem Kugel-Dreh-Verbinder rotationsfähig gelagert wird.

6. Verfahren nach einem der Ansprüche 1 bis 5, **dadurch gekennzeichnet, daß** eine Eigenfrequenz des Arbeitsrades durch die Positionierung einer Schwingungsmasse auf dem Arbeitsrad verändert wird.

7. Verfahren nach Anspruch 6, **dadurch gekennzeichnet, daß** die Schwingungsmasse relativ zum Arbeitsrad elastisch gelagert wird.

8. Verfahren nach einem der Ansprüche 1 bis 7, **dadurch gekennzeichnet, daß** die Schwingungsmasse relativ zum Arbeitsrad positionierbar gelagert wird.

9. Verfahren nach Anspruch 8, **dadurch gekennzeichnet, daß** die Schwingungsmasse in einer radialen Richtung des Arbeitsrades positionierbar gelagert wird.

10. Verfahren nach Anspruch 8, **dadurch gekennzeichnet, daß** die Schwingungsmasse in einer Umfangsrichtung des Arbeitsrades positionierbar gelagert wird.

11. Verfahren nach einem der Ansprüche 1 bis 10, **dadurch gekennzeichnet, daß** eine auf das Arbeitsrad einwirkende Anregung mindestens teilweise kompensiert wird.

12. Verfahren nach einem der Ansprüche 1 bis 13, **dadurch gekennzeichnet, daß** die dynamischen Eigenschaften des Modifizierers (43) durch eine variable und/oder positionierbare Masse verändert werden.

13. Verfahren nach einem der Ansprüche 1 bis 12, **dadurch gekennzeichnet, daß** die Eigenfrequenz eines mit Blasstationen (3) versehenen Blasrades (25) verändert wird.

14. Produktionsmaschine mit einem rotierenden Arbeitsrad und einer Mehrzahl auf dem Arbeitsrad an- geordneter Bearbeitungsstationen, **dadurch gekennzeichnet, daß** im Bereich des Arbeitsrades mindestens ein Modifizierer (43) zur Veränderung einer Eigenschwingungscharakteristik des mit den Bearbeitungsstationen versehenen Arbeitsrades angeordnet ist und daß der Modifizierer (43) eine Schwingungsdynamik derart aufweist, daß die modifizierte Eigenschwingungscharakteristik unterschiedlich zu einer Resonanzschwingungscharakteristik bei einer vorgegebenen Anregungsfrequenz ist, wobei der Modifizierer (43) vorgebbare variable dynamische Eigenschaften aufweist.

15. Produktionsmaschine nach Anspruch 14, **dadurch gekennzeichnet, daß** die dynamischen Eigenschaften des Modifizierers (43) in Abhängigkeit von einer auf das Arbeitsrad einwirkenden Anregungsfrequenz veränderlich sind.

16. Produktionsmaschine nach Anspruch 14, **dadurch gekennzeichnet, daß** die dynamischen Eigenschaften des Modifizierers (43) in Abhängigkeit von einer Drehzahl des Arbeitsrades veränderbar sind.

17. Produktionsmaschine nach einem der Ansprüche 14 bis 16, **dadurch gekennzeichnet, daß** in einem in lotrechter Richtung unteren Bereich des Arbeitsrades ein Rotationslager angeordnet ist.

18. Produktionsmaschine nach Anspruch 17, **dadurch gekennzeichnet, daß** das Rotationslager als ein Kugel-Dreh-Verbinder ausgebildet ist.

19. Produktionsmaschine nach einem der Ansprüche 14 bis 18, **dadurch gekennzeichnet, daß** auf dem Arbeitsrad eine Schwingungsmasse zur Veränderung der Eigenfrequenz angeordnet ist.

20. Produktionsmaschine nach einem der Ansprüche 14 bis 19, **dadurch gekennzeichnet, daß** die Schwingungsmasse gegenüber dem Arbeitsrad elastisch gelagert ist.

21. Produktionsmaschine nach einem der Ansprüche 14 bis 20, **dadurch gekennzeichnet, daß** die Schwingungsmasse relativ zum Arbeitsrad positionierbar angeordnet ist.

22. Produktionsmaschine nach Anspruch 21, **dadurch gekennzeichnet, daß** die Schwingungsmasse in einer radialen Richtung des Arbeitsrades positionierbar ist.

23. Produktionsmaschine nach Anspruch 21, **dadurch gekennzeichnet, daß** die Schwingungsmasse in einer Umfangsrichtung des Arbeitsrades positionierbar ist.

24. Produktionsmaschine nach einem der Ansprüche 14 bis 23, **dadurch gekennzeichnet, daß** in einer räumlichen Nähe zum Arbeitsrad ein Kompensator zur mindestens teilweisen Kompensation einer auf das Arbeitsrad einwirkenden Anregung angeordnet ist.

25. Produktionsmaschine nach einem der Ansprüche 14 bis 24, **dadurch gekennzeichnet, daß** der Modifizierer (43) ein aus mindestens zwei Teilvolumina bestehendes Flüssigkeitsreservoir sowie eine Pumpe zur vorgebbaren Aufteilung der Flüssigkeitsmenge auf die beiden Teilvolumina aufweist.

26. Produktionsmaschine nach einem der Ansprüche 14 bis 25, **dadurch gekennzeichnet, daß** das Arbeitsrad als Blasrad (25) einer Blasmaschine mit darauf angeordneten Blasstationen (3) ausgebildet ist.

## Claims

1. A method for operating a production machine, which is provided with a rotating operating wheel and a plurality of processing stations positioned on the operating wheel, **characterised in that** an intrinsic oscillation characteristic of the operating wheel, which is provided with the processing stations, is modified such that the modified intrinsic oscillation characteristic is specified so as to differ from a resonance oscillation characteristic at an excitation frequency acting on the operating wheel, wherein, for this purpose, a modifier (43) comprising specifiable variable dynamic properties for modifying the intrinsic oscillation characteristic is positioned in the area of the operating wheel.

2. The method according to Claim 1, **characterised in that** the dynamic properties of the modifier (43) are changed as a function of an excitation frequency acting on the operating wheel.

3. The method according to Claim 1, **characterised in that** the dynamic properties of the modifier (43) are changed as a function of a rotational speed of the operating wheel.

4. The method according to any one of Claims 1-3, **characterised in that** the operating wheel is rotatably supported in the area of its lower expansion in the perpendicular direction.

5. The method according to any one of Claims 1 to 4, **characterised in that** the operating wheel is rotatably supported by a ball-rotary connector.

6. The method according to any one of Claims 1 to 5, **characterised in that** an intrinsic frequency of the operating wheel is changed by the positioning of an oscillatory mass on the operating wheel.

7. The method according to Claim 6, **characterised in that** the oscillatory mass is elastically supported relative to the operating wheel.

8. The method according to any one of Claims 1 to 7, **characterised in that** the oscillatory mass is supported so that it can be positioned relative to the operating wheel.

9. The method according to Claim 8, **characterised in that** the oscillatory mass is supported so that it can be positioned in a radial direction of the operating wheel.

10. The method according to Claim 8, **characterised in that** the oscillatory mass is supported so that it can be positioned in a circumferential direction of the operating wheel.

11. The method according to any one of Claims 1 to 10, **characterised in that** an excitation acting on the operating wheel is at least partially compensated.

12. The method according to any one of Claims 1 to 13, **characterised in that** the dynamic properties of the modifier (43) are changed by means of a variable and/or positionable mass.

13. The method according to any one of Claims 1 to 12, **characterised in that** the intrinsic frequency of a blowing wheel (25), which is provided with blowing stations (3), is changed.

14. A production machine comprising a rotating operating wheel and a plurality of processing stations arranged on the operating wheel, **characterised in that** at least one modifier (43) for changing an intrinsic oscillation characteristic of the operating wheel, which is provided with the processing stations, is arranged in the area of the operating wheel, and that the modifier (43) has an oscillation dynamic such that the modified intrinsic oscillation characteristic differs from a resonance oscillation characteristic at a specified excitation frequency, wherein the modifier (43) has specifiable variable dynamic properties.

15. The production machine according to Claim 14, **characterised in that** the dynamic properties of the modifier (43) are changed as a function of an excitation frequency acing on the operating wheel.

16. The production machine according to Claim 14, **characterised in that** the dynamic properties of the modifier (43) can be changed as a function of a rotational speed of the operating wheel.

17. The production machine according to any one of Claims 14 to 16, **characterised in that** a rotary bearing is arranged in a lower area of the operating wheel in the perpendicular direction.

18. The production machine according to Claim 17, **characterised in that** the rotary bearing is formed as a ball-rotary connector.

19. The production machine according to any one of Claims 14 to 18, **characterised in that** an oscillatory mass for changing the intrinsic frequency is arranged on the operating wheel.

20. The production machine according to any one of Claims 14 to 19, **characterised in that** the oscillatory mass is elastically supported relative to the operating wheel.

21. The production machine according to any one of Claims 14 to 20, **characterised in that** the oscillatory mass is arranged so that it can be positioned relative to the operating wheel.

22. The production machine according to Claim 21, **characterised in that** the oscillatory mass can be positioned in a radial direction of the operating wheel.

23. The production machine according to Claim 21, **characterised in that** the oscillatory mass can be positioned in a circumferential direction of the operating wheel.

24. The production machine according to any one of Claims 14 to 23, **characterised in that** a compensator for at least partially compensating an excitation acting on the operating wheel is arranged in a spatial proximity to the operating wheel.

25. The production machine according to any one of Claims 14 to 24, **characterised in that** the modifier (43) has a liquid reservoir consisting of at least two partial volumes as well as a pump for the specifiable division of the amount of liquid between the two partial volumes.

26. The production machine according to any one of Claims 14 to 25, **characterised in that** the operating wheel is formed as blowing wheel (25) of a blowing machine comprising blowing stations (3) arranged thereon.

## Revendications

1. Procédé pour le fonctionnement d'une machine de production munie d'une roue de travail en rotation et d'une pluralité de stations de traitement positionnées sur la roue de travail, **caractérisé en ce qu'**une caractéristique d'oscillation propre de la roue de travail munie des stations de traitement est modifiée de façon telle que la caractéristique d'oscillation propre modifiée est prédéfinie pour être différente d'une caractéristique d'oscillation de résonance pour une fréquence d'excitation agissant sur la roue de travail, un modificateur (43) présentant des caractéristiques dynamique variables pouvant être prédéfinies étant dans ce but positionné au niveau de la roue de travail pour modifier pour modifier la caractéristique d'oscillation propre.

2. Procédé selon la revendication 1, **caractérisé en ce que** les caractéristiques dynamiques du modificateur (43) sont modifiées en fonction d'une fréquence d'excitation agissant sur la roue de travail.

3. Procédé selon la revendication 1, **caractérisé en ce que** les caractéristiques dynamiques du modificateur (43) sont modifiées en fonction d'une vitesse de rotation de la roue de travail.

4. Procédé selon l'une des revendications 1 à 3, **caractérisé en ce que** la roue de travail est, au niveau de son extension verticale inférieure, logée de façon à pouvoir tourner.

5. Procédé selon l'une des revendications 1 à 4, **caractérisé en ce que** la roue de travail est, au moyen d'un raccord rotatif à boule, logée de façon à pouvoir tourner

6. Procédé selon l'une des revendications 1 à 5, **caractérisé en ce qu'**une fréquence propre de la roue de travail peut être modifiée par le positionnement d'une masse oscillante sur la roue de travail.

7. Procédé selon la revendication 6, **caractérisé en ce que** la masse oscillante est logée de manière élastique par rapport à la roue de travail.

8. Procédé selon l'une des revendications 1 à 7, **caractérisé en ce que** la masse oscillante est logée de façon à pouvoir être positionnée par rapport à la roue de travail.

9. Procédé selon la revendication 8, **caractérisé en ce que** la masse oscillante est logée de façon à en permettre un positionnement radial par rapport à la roue de travail.

10. Procédé selon la revendication 8, **caractérisé en ce que** la masse oscillante est logée de façon à en permettre un positionnement périphérique par rapport à la roue de travail.

11. Procédé selon l'une des revendications 1 à 10, **caractérisé en ce qu'**une excitation agissant sur la roue de travail est partiellement au moins compensée.

12. Procédé selon l'une des revendications 1 à 13, **caractérisé en ce que** les caractéristiques dynamiques du modificateur (43) sont modifiées par une variable et/ou par une masse pouvant être positionnée.

13. Procédé selon l'une des revendications 1 à 12, **caractérisé en ce que** la fréquence propre d'une roue de soufflage (25) munie de stations de soufflage (3) est modifiée.

14. Machine de production munie d'une roue de travail en rotation et d'une pluralité de stations de traitement positionnées sur la roue de travail, **caractérisée en ce qu'**au moins un modificateur (43) est agencé au niveau de la roue de travail pour modifier une caractéristique d'oscillation propre de la roue de travail munie des stations de traitement, et **en ce que** le modificateur (43) présente une dynamique d'oscillation telle que la caractéristique d'oscillation propre modifiée est différente d'une caractéristique d'oscillation de résonance pour une fréquence d'excitation prédéfinie, le modificateur (43) présentant des caractéristiques dynamique variables pouvant être prédéfinies.

15. Machine de production selon la revendication 14, **caractérisée en ce que** les caractéristiques dynamiques du modificateur (43) peuvent être modifiées en fonction d'une fréquence d'excitation agissant sur la roue de travail.

16. Machine de production selon la revendication 14, **caractérisée en ce que** les caractéristiques dynamiques du modificateur (43) peuvent être modifiées en fonction d'une vitesse de rotation de la roue de travail.

17. Machine de production selon l'une des revendications 14 à 16, **caractérisée en ce qu'**un palier de rotation est agencé dans la zone inférieure en sens vertical de la roue de travail.

18. Machine de production selon la revendication 17, **caractérisée en ce que** le palier de rotation est réalisé sous forme de raccord rotatif à boule.

19. Machine de production selon l'une des revendications 14 à 18, **caractérisée en ce qu'**une masse oscillante est agencée sur la roue de travail pour modifier la fréquence propre.

20. Machine de production selon l'une des revendications 14 à 19, **caractérisée en ce que** la masse oscillante est logée de manière élastique par rapport à la roue de travail.

21. Machine de production selon l'une des revendications 14 à 20, **caractérisée en ce que** la masse oscillante est agencée de façon à pouvoir être positionnée par rapport à la roue de travail.

22. Machine de production selon la revendication 21, **caractérisée en ce qu'**elle permet un positionnement radial de la masse oscillante par rapport à la roue de travail.

23. Machine de production selon la revendication 21, **caractérisée en ce qu'**elle permet un positionnement périphérique de la masse oscillante par rapport à la roue de travail.

24. Machine de production selon l'une des revendications 14 à 23, **caractérisée en ce qu'**un compensateur st agencé à proximité de la roue de travail pour une compensation au moins partielle d'une excitation agissant sur la roue de travail.

25. Machine de production selon l'une des revendications 14 à 24, **caractérisée en ce que** le modificateur (43) présente un réservoir à liquide composé d'au moins deux volumes partiels ainsi qu'une pompe pour une répartition prédéfinissable de la quantité de liquide sur les deux volumes partiels.

26. Machine de production selon l'une des revendications 14 à 25, **caractérisée en ce que** la roue de travail est conçue sous forme de roue de soufflage (25) d'une machine de moulage par soufflage avec des stations de soufflage (3) agencées sur ladite roue.
